# EUROPÄISCHE PATENTSCHRIFT

(11) **EP 0 886 668 B1**
(45) Veröffentlichungstag und Bekanntmachung des Hinweises auf die Patenterteilung: **31.05.2000**
(21) Anmeldenummer: 97906185.0
(22) Anmeldetag: 07.03.1997
(51) Int. Cl.: C08L 23/02, C08L 23/16, C08L 23/08, C08L 23/04, C08L 23/10, C08K 5/15, C08K 5/09

(54) **THERMOPLASTISCHE FORMMASSE, VERFAHREN ZU IHRER HERSTELLUNG UND IHRE VERWENDUNG**
THERMOPLASTIC MOULDING COMPOUND, METHOD OF PRODUCING IT AND ITS USE
MATERIAU MOULABLE THERMOPLASTIQUE, SON PROCEDE DE PRODUCTION ET SON UTILISATION

(30) Priorität: 16.03.1996 DE 19610415
(43) Veröffentlichungstag der Anmeldung: 30.12.1998
(73) Patentinhaber: A. SCHULMAN GMBH, 50170 Kerpen (DE)
(72) Erfinder: CHRIST, Hubert, D-52399 Merzenich (DE); MEYERHOFF, Hans-Peter, D-50189 Elsdorf (DE)
(74) Vertreter: Godemeyer, Thomas, Dr.
(86) Internationale Anmeldenummer: EP9701154
(87) Internationale Veröffentlichungsnummer: WO9734950

(56) Entgegenhaltungen:
- US-A- 5 198 497
- US-A- 5 206 294
- US-A- 5 434 217

## Beschreibung

Gegenstand der Erfindung ist eine thermoplastische Formmasse, ein Verfahren zu ihrer Herstellung sowie ihre Verwendung zur Herstellung von Formkörpern.

Für viele Jahre wurde zur Herstellung von thermoplastischen Formkörpern Polyvinylchlorid (PVC) eingesetzt. Dieser Kunststoff wurde sowohl zur Herstellung von Gehäuseteilen oder Steckerleistensockeln im Elektro- oder Elektronikbereich verwendet-als auch für Gerätegehäuse im Haushaltsbereich und insbesondere in der Automobilindustrie für innere Verschalungen von Automobilen, beispielsweise Motorrauminnenabdeckungen, Armaturenbretter, Türinnenverkleidungen, Dachverkleidungen, Dachinnenverkleidungen und Sitzschalen.

Obwohl PVC hervorragende Eigenschaften besitzt, ergeben sich zahlreiche Nachteile bei der Verwendung dieses Kunststoffes. So müssen insbesondere große Mengen von Weichmachern eingearbeitet werden, um gute Flexibilität und gute Eigenschaften bei niedrigen Temperaturen zu erreichen sowie eine weiche Oberflächenbeschaffenheit zu erzeugen.

Da insbesondere im Sommer im Inneren von Automobilen relativ hohe Temperaturen durch Sonneneinstrahlung auftreten, kommt es zu einer Migration der Weichmacher an die Oberfläche des PVC-Formkörpers, was dazu führt, daß die Oberflächenschicht der Schalungen brüchig und spröde wird. Darüber hinaus werden die Weichmacher auf der Innenseite der Fensterscheiben niedergeschlagen und verunreinigen somit die Innenluft in der Fahrgastzelle des Automobils.

Ein weiterer Nachteil ist das Problem der Aufarbeitung von Polyvinylchlorid. Die Verbrennung des Kunststoffes führt zu großen Mengen von Chlorwasserstoff und Schwermetallresten. Weiterhin ist der Kunststoff nicht verträglich mit anderen Kunststoffen, die bei der Herstellung von Automobilen verwendet werden, so daß bei der Aufarbeitung von Abfällen aus PVC Probleme auftreten.

In jüngerer Zeit sind auch nicht halogenierte, thermoplastische Formkörper bekannt geworden, die gute Temperatureigenschaften besitzen und die ionomere Kunststoffe enthalten mit Polyolefinanteilen.

Diese ionomeren Kunststoffe besitzen eine niedrige Dichte, sind hart und haben bei Raumtemperatur eine hervorragende Kratzfestigkeit und Schlagfestigkeit. Diese Substanzen werden daher als Ersatzmaterial für PVC bereits für Innenverkleidungen von Automobilen verwendet. Sie besitzen jedoch den Nachteil, daß beim Erhitzen des Materials zusätzlich zu einer Deformierung des Formkörpers die Oberfläche so verändert wird, daß es zu einem Glänzen der Oberflächen kommt. Diese glänzenden Oberflächen sind bei Innenverkleidungen von Automobilen jedoch unerwünscht.

Üblicherweise werden die Oberflächen der Formkörper matt gestaltet, indem die Oberfläche des Materials geprägt wird. Es wurde jedoch festgestellt, daß bei hohen Temperaturen, die insbesondere im Sommer in Kraftfahrzeugen auftreten und die bei bis zu 120 °C liegen, derartige thermoplastische Formkörper durch die Hitze schmelzen und die Oberfläche des Materials weich wird. Dadurch verliert sich die Prägung des Materials und die Oberfläche erhält einen unerwünschten Glanz.

Die aus dem Stand der Technik bekannten nicht polyvinylchloridhaltigen thermoplastischen Formmassen besitzen eine niedrige Zersetzungstemperatur sowie eine niedrige Wärmestabilität und Hitzereflexionstemperatur. Weiterhin kommt es in den Fertigteilen aus mit Polypropylen hergestellten thermoplastischen Formkörpern zu Nachkristallisationen.

Die US 4,387,188 beschreibt die Herstellung einer thermoplastischen Formmasse aus linearem Polyolefin, das mit einer Faser gefüllt ist und einem säurehaltigen Copolymer. Dieses säurehaltige Copolymer wird durch radikalische Reaktion eines endständigen α-Olefins mit einer α,β-ethylenisch ungesättigten C₃- bis C₈-Carbonsäure hergestellt. Weiterhin wird ein Teil des säurehaltigen Copolymers mit Zinkionen neutralisiert und zusätzlich Copolymere aus der Gruppe der Methacrylsäuren zugesetzt.

Die US 4,871,810 beschreibt eine weitere thermoplastische Formmasse mit zwei Ethylen-Copolymere enthaltenden coreaktiven Gruppen. Diese Formmassen bestehen aus Polyethylen, Polypropylen und Copolymeren davon sowie aus Poly(buten-1), Poly-4-methylpenten-1, Polystyrol und Copolymeren davon. Diesen Polymeren wird ein Copolymer aus Ethylen und ungesättigten Monocarbonsäuren und Derivaten der Acrylsäure hinzugefügt. Als weitere Komponenten werden gepfropfte Polymere mit reaktiven Endgruppen wie Epoxid, Isocyanurat, Aziridin, Silanen, Alkylhalogenen, Halogenketonen, Aldehyden oder Oxazolinen eingesetzt. Ebenso werden Ionomere aus der Gruppe der Methacrylate verwendet.

Die US 4,968,752 beschreibt eine ionomere Zusammensetzung umfassend ein Reaktionsprodukt aus 90 - 99,5 Gew% eines Ethylen-Copolymer-Ionomers enthaltend Ethyleneinheiten und Einheiten von ungesättigten Carboxylatsalzen, einem Olefin-Copolymer mit Epoxygruppen in den Seitenketten, einem olefinischen thermoplastischen Elastomer, das aus Ethylen-α-Olefin-Copolymerkautschuk oder aus Polyolefinkautschuk bestehen kann. Die Epoxygruppe kann umgesetzt sein mit einem α-Olefin, gekoppelt mit einer ethylenisch ungesättigten Glycidverbindung aus der Gruppe Glycidacrylate, Glycidylmethacrylate und ethylenisch ungesättigte Glycidylether. Die Mischung kann weiterhin peroxidisch nicht vernetzte Kohlenwasserstoffkautschuke, Mineralöl, Weichmacher und Vernetzer enthalten.

Die US 5,206,294 beschreibt eine thermoplastische Zusammensetzung bestehend aus Polypropylen, einem unvernetzten Ethylenpropylen-Copolymerkautschuk, einem ionomeren Copolymer von Ethylen und α,β-ungesättigten C₃- bis C₈-Carbonsäuren und einem Copolymer von Ethylen und Glycidylacrylat oder Glycidylmethacrylat. Als α,β-ungesättigte C₃- bis C₈-Carbonsäuren werden Acryl- und Methacrylsäure eingesetzt. Das ionomere Copolymer kann weiterhin copolymerisierte Einheiten von Alkylacrylaten enthalten.

Ausgehend vom Stand der Technik ist es die technische Aufgabe der Erfindung, eine neue polyolefinmodifizierte thermoplastische Formmasse zur Verfügung zu stellen, die eine hohe Schlagfestigkeit, eine sehr gute Oberflächenbeschaffenheit, hohe Kratzfestigkeiten, hohe Steifigkeiten und sehr gute Dimensionseigenschaften besitzt.

Diese technische Aufgabe wird gelöst durch eine thermoplastische Formmasse enthaltend
(A) 5 - 95 Gew.-Tl. Polyolefin ausgewählt aus der Gruppe Polyethylen, Polypropylen, Polybuten-1, Poly-4-methylpenten-1;
(B) 5 - 65 Gew.-Tl. unvernetzter Ethylen-Propylen-Copolymerkautschuk mit einem Ethylengehalt von 45 - 80 Gew% bezogen auf die Gesamtmenge an Kautschuk und/oder 5 - 65 Gew.-Tl. Cycloolefin-Copolymer mit einem Ethylengehalt von 20 - 50 Gew% bezogen auf das Cycloolefin- Copolymer und/oder 5 - 65 Gew.-Tl. Polyolefinelastomer aus ungesättigtem Ethylen-Octen-Copolymer mit einem Schmelzindex von 0,5 - 18 g/10 min. (190 °C/2,16 kg);
(C) 15 - 60 Gew.-Tl. eines ionomeren Copolymers aus Ethylen und einer α,β-ungesättigten Carbonsäure oder einem Carbonsäureanhydrid dieser Carbonsäure, wobei das Ionomer Carbonsäuregruppen enthält, die mit Metallionen ausgewählt aus der Gruppe Natrium, Kalium, Calcium, Magnesium, Zink neutralisiert sind;
(D) 0 - 65 Gew.-Tl. einer α,β-ungesättigten ethylenischen Carbonsäureverbindung oder eines Esters dieser Carbonsäure, ausgewählt aus der Gruppe Acrylsäure, Methacrylsäure;
(E) 0,01 - 5 Gew.-Tl. einer Epoxidverbindung der Formel I 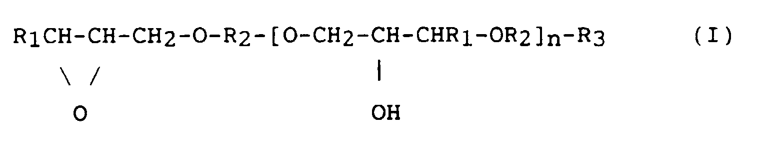 wobei n = 0 - 10, R₁ = Wasserstoff, eine Alkyl-, Aralkyl - oder Arylgruppe ist und R₂ eine Alkyl-, Aralkyl, Alkylalkoxy-, Cycloalkyl- oder Cycloalkenylgruppe ist und R₃ gleich 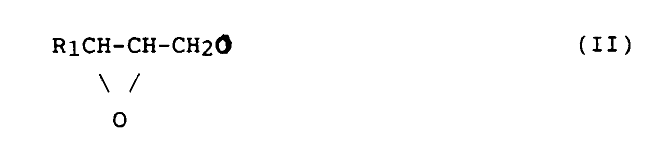 ist, wenn n ≠ 0 ist und R₃ = Wasserstoff ist, wenn n = 0 ist oder Gemische dieser Verbindungen;
(F) 0,01 - 5 Gew.-Tl. einer Carbonsäure der Formel III

   R₄-CH=CH-COOH (III)

   wobei R₄ eine Phenyl-, Naphthyl-, Cyclohexyl- oder Cyclohexenylgruppe ist und C₁ - C₄ alkylierte und/oder alkoxylierte Derivate der Verbindung der Formel III sind.

Als Polyolefinkomponente A können Polyolefine ausgewählt aus der Gruppe Polyethylen niedriger Dichte (LDPE), Polyethylen sehr niedriger Dichte (VLDPE), Polyethylen hoher Dichte (HDPE), lineares Polyethylen niedriger Dichte (LLDPE), isotaktisches Polypropylen, ataktisches Polypropylen, syndiotaktisches Polypropylen, enthalten sein. Dabei werden unter Polyethylen niedriger Dichte solche mit einer Dichte von 0,915 - 0,935 g/cm³ verstanden. Polyethylene hoher Dichte besitzen im allgemeinen eine Dichte von 0,94 - 0,965 g/cm³. Polyolefine mit sehr niedriger Dichte besitzen Dichten, die unter 0,918 g/cm³ liegen.

Ein besonders bevorzugtes Polyethylen für die Verwendung als Komponente A ist ein Polyethylen hoher Dichte mit einem Schmelzindex von 0,7 - 8,5 g/10 min. (190 °C/2,16 kg).

Die Polyolefinkomponente A ist in der thermoplastischen Formmasse in bevorzugter Weise in Mengen von 30 - 65 Gew.-Tl., besonders bevorzugt von 45 - 65 Gew.-Tl. enthalten.

Die thermoplastische Formmasse enthält als weitere Komponente B unvernetzte Ethylenpropylen-Copolymerkautschuke, Cycloolefin-Copolymere oder Polyolefinelastomere aus ungesättigten Ethylen-Octen-Copolymeren. Als unvernetzter Ethylen-Propylen-Copolymerkautschuk wird bevorzugt ein Ethylen-Propylen enthaltendes, nicht konjugiertes Diencopolymer (EPDM) verwendet. Die nicht konjugierten Diene können 6 - 22 Kohlenstoffatome enthalten, wobei sie eine polymerisierbare Doppelbindung aufweisen. Die nicht vernetzten Ethylen-Propylen-Copolymerkautschuke enthalten 45 - 80 Gew%, vorzugsweise 60 - 80 Gew% Ethylen. Der Gehalt an nicht konjugiertem Dien liegt im allgemeinen zwischen 1 und 7 Gew%. Besonders bevorzugte EPDM-Kautschuke sind Ethylen/Propylen-1,4-Hexadien, Ethylen/Propylen/Dicyclopentadien, Ethylen/Propylen/Norbornen, Ethylen/Propylen/Methylen-2-norbornen und Ethylen/Propylen/1,4-Hexadien/Norbornadien. Dadurch, daß die Ethylen-Propylenkautschuke nicht vernetzt sind, erhält die thermoplastische Zusammensetzung eine verbesserte Abriebfestigkeit.

Als Cycloolefin-Copolymere werden Copolymere mit einem Ethylengehalt von 20 - 50 Gew% bezogen auf das Cycloolefin-Copolymer eingesetzt. Bei den Cycloolefin-Copolymeren handelt es sich um eine neue Klasse polymerer Werkstoffe, die besonders gute Eigenschaften aufweisen, daher auch für den Automobilbau besonders geeignet sind.

Als weiterer Bestandteil der Komponente B kann ein Polyolefin-Elastomer aus ungesättigtem Ethylen-Octen-Copolymer verwendet werden. Diese Copolymere sind beispielsweise unter der Handelsbezeichnung "Engage®" von Dow Plastics erhältlich. Jede der als Komponente B beschriebenen Polymere können einzeln oder im Gemisch eingesetzt werden.

Ein weiterer Bestandteil der thermoplastischen Formmasse gemäß der Erfindung ist ein ionomeres Copolymer aus Ethylen und einer α,β-ungesättigten Carbonsäure oder einem Carbonsäureanhydrid dieser Carbonsäure (Komponente C). Das Ionomer enthält Carbonsäuregruppen, die mit Metallionen ausgewählt aus der Gruppe Natrium, Kalium, Calcium, Magnesium und Zink neutralisiert sind. In besonders bevorzugter Ausführungsform werden als Komponente C 25 - 40 Gew.-Tl. bezogen auf die Gesamtmenge des Ionomer-Copolymers aus Ethylen und Methacrylsäure oder Acrylsäure mit einem Säuregehalt von 10 - 16 Gew% bezogen auf das Copolymer, einer Dichte von 0,96 - 0,97 g/cm³ und einem Schmelzindex von 0,7 - 7 g/10 min. eingesetzt, wobei das Copolymer 10 Gew% Zinkionen enthält, die die Säuregruppen neutralisieren. Als α,β-ungesättigte Carbonsäure werden für die Komponente C in bevorzugter Weise Acrylsäure und Methacrylsäure verwendet. Es können jedoch auch Ethacrylsäure, Itaconsäure, Maleinsäure, Fumarsäure und die entsprechenden Carbonsäureanhydride dieser Verbindungen eingesetzt werden. Als Metallionen werden in bevorzugter Weise Zinkionen eingesetzt.

Die bei der Copolymerisation von Ethylen und der ungesättigten Carbonsäure entstehenden Carbonsäuregruppen können statistisch oder nichtstatistisch in der Polymerkette verteilt sein. Der α-Olefingehalt der Komponente C beträgt in bevorzugter Weise bis zu 85 mol% α-Olefin bezogen auf den Gehalt an ungesättigten Carbonsäuren und/oder Carbonsäureanhydridgruppen. Die Carboxylgruppen des Copolymers werden durch Zusatz neutralisierend wirkender Metallverbindungen in Carboxylate überführt. Dabei können alle Carbonsäuregruppen oder nur ein Teil der Carbonsäuregruppen neutralisiert werden.

Die thermoplastische Formmasse gemäß der Erfindung kann weiterhin als Komponente D auch 0,01 bis 65 Gew.-Tl. freie α,β-ungesättigte ethylenische Carbonsäureverbindungen oder Ester hiervon enthalten. Diese sind ausgewählt aus der Gruppe Acrylsäure und Methacrylsäure. In bevorzugter Weise sind 5 - 50 Gew% der Komponente D ausgewählt aus der Gruppe Methylacrylat, Isobutylacrylat, n-Butylacrylat.

Als Epoxidverbindung gemäß Formel I werden in bevorzugter Weise Mono-, Di- oder Triglycidether eingesetzt. In bevorzugter Weise wird als Epoxidverbindung der Formel I eine Verbindung verwendet, in der R₁ Wasserstoff ist und R₂ eine C₁₃- bis C₁₅-Arylalkylgruppe.

Wenn R₁ Wasserstoff ist, kann R₂ bevorzugt eine Verbindung der Formel IV sein: 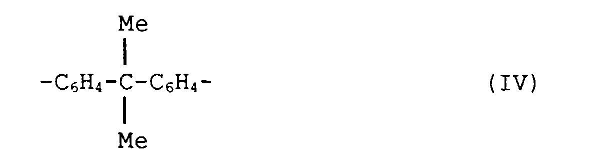 Als Beispiele für Epoxidverbindungen der Formel I, die erfindungsgemäß eingesetzt werden können, seien die folgenden Epoxidverbindungen genannt: n-Butylglycidether, 2-Ethyl-Hexyl-Glycidether, Glycidether längerkettiger aliphatischer Alkohole, Ethylenglycoldiglycidether, Butoxy-Diethylenglycidether, Neopentylglycoldiglycidether, Butandioldiglycidether, Hexandioldiglycidether, Phenylglycidether, Kresylglycidether, p-ter. Butylphenylglycidether, Phenylphenolglycidether, Dihydroxydiphenylpropandiglycidether, Resorcin- und Brenzkatechindiglycidether, Nonylphenylglycidether sowie weitere Glycidether und auch Gemische davon.

Die thermoplastische Formmasse gemäß der Erfindung enthält weiterhin eine Carbonsäure der Formel III als Komponente F. In dem Fall, in dem R₄ Phenyl ist, kann in bevorzugter Weise die Phenylgruppe mit Phenyl-, Phenoxy-, Hydroxyl-, Halogen- oder Cyanogruppen in Ortho-, Meta- oder Parastellung substituiert sein. Als bevorzugte Carbonsäure wird Zimtsäure eingesetzt.

Die thermoplastische Formmasse gemäß der Erfindung enthält weiterhin in bevorzugter Ausführungsform herkömmliche Füll- und Verstärkungsstoffe ausgewählt aus der Gruppe Glasfaser, Kohlefaser, Mineralfaser, Talkum und Kreide.

Es können weiterhin Mittel eingesetzt werden ausgewählt aus der Gruppe Färbemittel, Stabilisatoren, UV-Schutzmittel, Antistatikmittel, Plastifiziermittel und Flammschutzmittel.

Die Herstellung der thermoplastischen Formmassen gemäß der Erfindung erfolgt durch Mischen der einzelnen Komponenten in einer Mischtrommel, anschließendem Kneten, Schmelzen und Extrudieren. Das homogene, schmelzflüssige Extrudat wird dann beispielsweise als Strang durch ein Wasserbad abgezogen und in einem Granulator zerkleinert und getrocknet. Für die Herstellung werden insbesondere übliche Plastifiziermaschinen verwendet. Hierzu gehören beispielsweise Busskneter, Ein- oder Zweiwellenextruder.

Die erfindungsgemäße thermoplastische Formmasse wird zur Herstellung von Formkörpern aller Art verwendet. Sie ist insbesondere geeignet zur Herstellung von Innenverkleidungen für Automobile, beispielsweise von Motorverkleidungen, Verkleidungen im Innenbereich der Fahrzeuge, wie Armaturenbretter, Türinnenverkleidungen und Sitzschalen.

Die Eigenschaften der erfindungsgemäßen thermoplastischen Formmasse sind den Eigenschaften der aus dem Stand der Technik bekannten thermoplastischen Formmassen weit überlegen. Sie verfügen insbesondere über eine erheblich verbesserte Schlagfestigkeit, gute Oberflächenbeschaffenheit, eine hohe Kratzfestigkeit, eine gute Dimensionsstabilität, eine gute thermooxidative Beständigkeit und eine besonders hohe Wärmestabilisierung. Sie weisen weiterhin nicht die Nachteile auf, die aus dem Stand der Technik von ähnlichen Polymeren bekannt sind, die ionomere Ethylen-Copolymere enthalten.

Die nachfolgenden Beispiele sollen die Erfindung näher erläutern, ohne diese jedoch zu beschränken.

### Beispiele

Für die Beispiele wurden verschiedene Polymere eingesetzt. Diese Polymere wurden durch Zusatz von Epoxidharzen, hergestellt aus Bisphenol A und Epichlorhydrin mit einem mittleren Molekulargewicht von 900 bis 1400 modifiziert und mit Zimtsäure versehen. Diese Komponenten wurden miteinander in verschiedenen Mischungsverhältnissen auf einem Zweiwellenextruder ZSK 30 von Werner und Pfleiderer bei 210 °C extrudiert, stranggranuliert und zu Formteilen spritzgegossen. Anschließend wurde die Erweichungstemperatur Vicat A gemäß DIN 53460 gemessen. Dabei wird diejenige Temperatur ermittelt, bei der ein auf den zu untersuchenden Stoff unter bestimmter Belastung aufgesetzter Körper beim Erwärmen der Probe bei Erreichung der Erweichungstemperatur in diese eingedrückt wird.

Es wurde weiterhin die Kerbschlagzähigkeit mit Hilfe des Izod-Testes nach ASTM D256/81 ermittelt. Die Messung der Izodzahl dient zur Ermittlung der Kerbschlagzähigkeit des Werkstoffes. Dabei wird ein genormter Prüfkörper in standardisierter Weise mit einem Hammer einem einmaligen Schlagtest unterzogen. Es wird die Kraft ermittelt, bei der das Prüfteil bricht. Die Izodzahl wird in kJ/m² angegeben.

Weiterhin wurde der Schmelzindex MFI nach DIN 53735 ermittelt. Es handelt sich dabei um ein Maß für die Schmelzviskosität von Thermoplasten. Der Schmelzindex gibt die Menge Material an, die in 10 Minuten unter der Wirkung einer festgelegten Kraft durch eine genormte Düse extrudiert wird. Der Schmelzindex ist ein Maß für die mechanische Festigkeit des thermoplastischen Materials.

### Vergleichsbeispiel 1

Es wird eine polymere Mischung hergestellt aus 30 Gew.-Tl. Polyethylen hoher Dichte mit einer Dichte von 0,963 g/cm³ und einem MFI gemessen bei 190 °C/2,16 kg von 0,7 g/10 min. Es werden 30 Gew.-Tl. eines Polyethylens hoher Dichte mit der gleichen Dichte, jedoch einem MFI von 8,5 g/10 min. (190 °C/2,16 kg) zugegeben. Zu dieser Mischung gibt man 35 Gew.-Tl. eines ionomeren Copolymers mit einem Ethylengehalt von 85 Gew.%, einem Gehalt an Methacrylsäure von 15 Gew.% und einem Gehalt an Zinkionen von 4,3 Gew.%, einer Dichte von 0,97 g/cm³ und einem MFI von 0,7 g/10 min. (190 °C/2,16 kg).

Die Zusammensetzung enthält weiterhin 1 Gew.-Tl. Glasfaser und 2,4 Gew.-Tl. üblicher Hilfsstoffe. Diese Mischung wird in einem Zweiwellenextruder ZSK 30 von Werner und Pfleiderer bei 210 °C extrudiert, stranggranuliert und zu Formteilen spritzgegossen. Mit diesen Formteilen wurden die nachstehenden Meßergebnisse erhalten:
Vicat A = 98 °C
Izod, ungekerbt = ohne Bruch
MFI Schmelzindex (230 °C/2,16 kg) = 5,5 g/10 min.

### Vergleichsbeispiel 2

Es wurde dieselbe Zusammensetzung gewählt wie in Vergleichsbeispiel 1, jedoch wurde keine Glasfaser eingesetzt und statt dessen 2 Gew.-Tl. einer Epoxidverbindung und 0,5 Gew.-Tl. Zimtsäure eingesetzt. Diese Mischung wurde auf einem Zweiwellenextruder ZSK 30 von Werner und Pfleiderer bei 210 °C extrudiert, stranggranuliert und zu Formteilen spritzgegossen. Die so erhaltenen Formteile hatten die folgenden Eigenschaften:
Vicat A = 105 °C
Izod, ungekerbt = ohne Bruch
MFI Schmelzindex (230 °C/2,16 kg) = 0,12 g/10 min.

### Vergleichsbeispiel 3

Es wurde eine Mischung hergestellt aus 30 Gew.-Tl. eines Polyethylens hoher Dichte (0,963 g/cm³) und einem Schmelzindex gemessen bei 190 °C/2,16 kg von 8,5 g/10 min. Weiterhin wurden eingesetzt 30 Gew.-Tl. eines Polypropylen Copolymers mit einem Ethylengehalt von 50 Gew.%, einer Dichte von 0,901 g/cm³ und einem Schmelzindex MFI von 12 g/10 min. Dazu wurden 35 Gew.-Tl. eines ionomeren Copolymers eingesetzt, das die gleiche Zusammensetzung besitzt wie in Vergleichsbeispiel 1. Diese Mischung wurde auf einem Zweiwellenextruder ZSK 30 von Werner und Pfleiderer bei 210 °C versucht zu extrudieren. Es stellte sich heraus, daß diese Mischung nicht granulierbar ist aufgrund der Weichheit des erhaltenen Materials.

### Beispiel 1

Es wurden dieselben Komponenten gemischt wie im Vergleichsbeispiel 3, jedoch zusätzlich 2 Gew.-Tl. einer Epoxidverbindung und 0,5 Gew.-Tl. Zimtsäure hinzugesetzt. Diese Komponenten wurden miteinander vermischt und auf einem Zweiwellenextruder ZSK 30 von Werner und Pfleiderer bei 210 °C extrudiert, stranggranuliert und zu Formteilen spritzgegossen. Das so erhaltene Material besaß folgende Eigenschaften:
Vicat A = 102 °C
Izod, ungekerbt = ohne Bruch (zum Teil > 70)
MFI Schmelzindex (230 °C/2,16 kg) = 0,3 g/10 min.

Aus den Beispielen ist zu entnehmen, daß die erfindungsgemäße thermoplastische Formmasse gegenüber den Vergleichsbeispielen einen erheblich niedrigeren Schmelzindex aufweist und daher ein höheres Molekulargewicht besitzen muß sowie bessere mechanische Eigenschaften aufweist, insbesondere bei langanhaltender thermischer Belastung.

## Patentansprüche

1. Thermoplastische Formmasse enthaltend
(A) 5 - 95 Gew.-Tl. Polyolefin ausgewählt aus der Gruppe Polyethylen, Polypropylen, Polybuten-1, Poly-4-methylpenten-1;
(B) 5 - 65 Gew.-Tl. unvernetzter Ethylen-Propylen-Copolymerkautschuk mit einem Ethylengehalt von 45 - 80 Gew% bezogen auf die Gesamtmenge an Kautschuk und/oder 5 - 65 Gew.-Tl. Cycloolefin-Copolymer mit einem Ethylengehalt von 20 - 50 Gew% bezogen auf das Cycloolefin-Copolymer und/oder 5 - 65 Gew.-Tl. Polyolefinelastomer aus ungesättigtem Ethylen-Octen-Copolymer mit einem Schmelzindex von 0,5 - 18 g/10 min. (gemessen nach DIN 53735);
(C) 15 - 60 Gew.-Tl. eines ionomeren Copolymers aus Ethylen und einer α,β-ungesättigten Carbonsäure oder einem Carbonsäureanhydrid dieser Carbonsäure, wobei das Ionomer Carbonsäuregruppen enthält, die mit Metallionen ausgewählt aus der Gruppe Natrium, Kalium, Calcium, Magnesium, Zink neutralisiert sind;
(D) 0 - 65 Gew.-Tl. einer α,β-ungesättigten ethylenischen Carbonsäureverbindung oder eines Esters dieser Carbonsäure, ausgewählt aus der Gruppe Acrylsäure, Methacrylsäure;
(E) 0,01 - 5 Gew.-Tl. einer Epoxidverbindung der Formel I 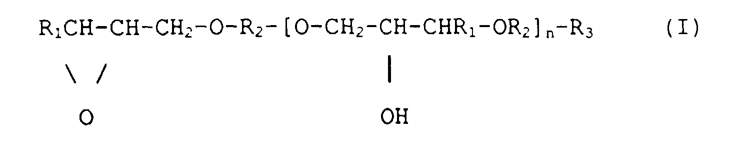 wobei n = 0 - 10, R₁ = Wasserstoff, eine Alkyl-, Aralkyl- oder Arylgruppe ist und R₂ eine Alkyl-, Aralkyl, Alkylalkoxy-, Cycloalkyl- oder Cycloalkenylgruppe ist und R₃ gleich 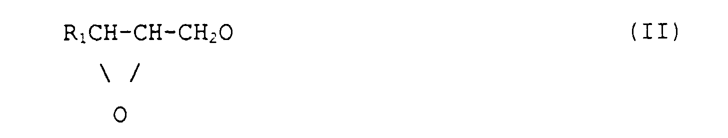 ist, wenn n ≠ 0 ist und R₃ = Wasserstoff ist, wenn n = 0 ist oder Gemische dieser Verbindungen;
(F) 0,01 - 5 Gew.-Tl. einer Carbonsäure der Formel III
R₄-CH=CH-COOH (III)
wobei R₄ eine Phenyl-, Naphthyl-, Cyclohexyl- oder Cyclohexenylgruppe ist und C₁ - C₄ alkylierte und/oder alkoxylierte Derivate der Verbindung der Formel III sind.

2. Thermoplastische Formmasse nach Anspruch 1 dadurch gekennzeichnet, daß als Komponente A Polyolefin ausgewählt aus der Gruppe Polyethylen niedriger Dichte, Polyethylen sehr niedriger Dichte, Polyethylen hoher Dichte, lineares Polyethylen niedriger Dichte, isotaktisches Polypropylen, ataktische Polypropylen, syndiotaktisches Polypropylen enthalten sind.

3. Thermoplastische Formmasse nach den Ansprüchen 1 und 2 dadurch gekennzeichnet, daß als Komponente A 30 - 65 Gew.-Tl. Polyolefin bezogen auf die Gesamtmenge enthalten sind.

4. Thermoplastische Formmasse nach den Ansprüchen 1 bis 3 dadurch gekennzeichnet, daß als Komponente A bezogen auf die Gesamtmenge 45 - 65 Gew.-Tl. Polyethylen hoher Dichte mit einem Schmelzindex von 0,7 - 8,5 g/10 min. (gemessen nach DIN 53735) enthalten sind.

5. Thermoplastische Formmasse nach den Ansprüchen 1 bis 4 dadurch gekennzeichnet, daß als Komponente C 25 - 40 Gew.-Tl. bezogen auf die Gesamtmenge eines Ionomer-Copolymers aus Ethylen und Methacrylsäure oder Acrylsäure mit einem Säuregehalt von 10 - 16 Gew% bezogen auf das Copolymer, einer Dichte von 0,96 bis 0,97 g/cm³, einem Schmelzindex von 0,7 - 7 g/10 min. (gemessen nach DIN 53735) eingesetzt werden, wobei das Copolymer 10 Gew% Zinkionen enthält, die die Säuregruppen neutralisieren.

6. Thermoplastische Formmasse nach den Ansprüchen 1 bis 5 dadurch gekennzeichnet, daß die Komponente C bis 85 Mol% α-Olefin enthält, bezogen auf den Gehalt an ungesättigten Carbonsäuren und/oder Carbonsäureanhydridgruppen.

7. Thermoplastische Formmasse nach den Ansprüchen 1 bis 6 dadurch gekennzeichnet, daß 5 - 50 Gew% der Komponente D ausgewählt sind aus der Gruppe Methylacrylat, Iso-Butylacrylat, n-Butylacrylat.

8. Thermoplastische Formmasse nach den Ansprüchen 1 bis 7 dadurch gekennzeichnet, daß die Verbindung der Formel I ein Mono-, Di- oder Tri-Glycidether ist.

9. Thermoplastische Formmasse nach den Ansprüchen 1 bis 8 dadurch gekennzeichnet, daß R₁ = Wasserstoff und R₂ = eine C₁₃ bis C₁₅ Arylalkylgruppe ist.

10. Thermoplastische Formmasse nach den Ansprüchen 1 bis 9 dadurch gekennzeichnet, daß R1 = Wasserstoff und R2 = eine Verbindung der Formel IV 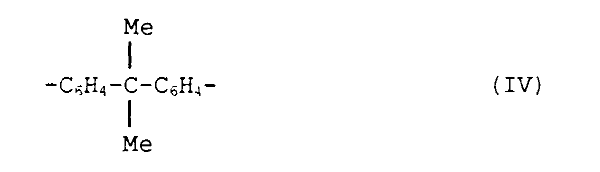 ist.

11. Thermoplastische Formmasse nach den Ansprüchen 1 bis 10 dadurch gekennzeichnet, daß die Phenylgruppe der Formel III mit Phenyl-, Phenoxy-, Hydroxyl-, Halogen- oder Cyanogruppen in Ortho-, Meta- oder Parastellung substituiert ist.

12. Thermoplastische Formmasse nach den Ansprüchen 1 bis 11 dadurch gekennzeichnet, daß herkömmliche Füll- und Verstärkungsstoffe, ausgewählt aus der Gruppe Glasfaser, Kohlefaser, Mineralfaser, Talkum, Kreide enthalten sind.

13. Thermoplastische Formmasse nach den Ansprüchen 1 bis 12 dadurch gekennzeichnet, daß zusätzlich Mittel, ausgewählt aus der Gruppe Färbemittel, Stabilisatoren, UV-Schutzmittel, Antistatikmittel, Plastifiziermittel und Flammschutzmittel enthalten sind.

14. Verfahren zur Herstellung der thermoplastischen Formmassen gemäß Ansprüchen 1 bis 13 dadurch gekennzeichnet, daß die Komponenten auf herkömmlichen Plastifiziermaschinen gemischt, geknetet und anschließend extrudiert werden.

15. Verwendung der thermoplastischen Formmasse nach den Ansprüchen 1 bis 13 zur Herstellung von Formkörpern.

## Claims

1. A thermoplastic molding compound, containing
(A) 5 - 95 parts by weight of a polyolefin selected from the group of polyethylene, polypropylene, polybut-1-ene, poly(4-methylpent-1-ene);
(B) 5 - 65 parts by weight of a non-crosslinked ethylene-propylene copolymer rubber having an ethylene content of 45-80 wt.-% relative to the total amount of rubber, and/or 5-65 parts by weight of a cycloolefin copolymer having an ethylene content of 20-50 wt.-% relative to the cycloolefin copolymer, and/or 5-65 parts by weight of a polyolefin elastomer consisting of an unsaturated ethylene-octene copolymer having a melt index of 0.5-18 g/10 min (measured according to DIN 53735);
(C) 15 - 60 parts by weight of a ionomeric copolymer of ethylene and an α,β-unsaturated carboxylic acid or an anhydride of said carboxylic acid, the ionomer containing carboxylic acid groups neutralized with metal ions selected from the group of sodium, potassium, calcium, magnesium, zinc;
(D) 0 - 65 parts by weight of an α,β-unsaturated ethylenical carboxylic acid compound or an ester of said carboxylic acid, selected from the group of acrylic acid, methacrylic acid;
(E) 0.01 - 5 parts by weight of an epoxide compound of formula I 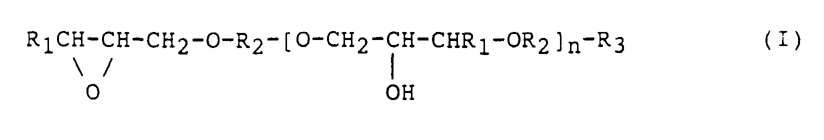 wherein n = 0-10, R₁ = hydrogen, an alkyl, aralkyl or aryl group, and R₂ is an alkyl, aralkyl, alkylalkoxy, cycloalkyl, or cycloalkenyl group, and R₃ is 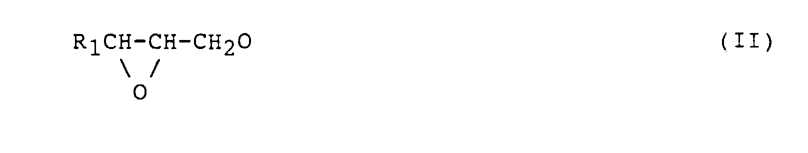 if n ≠ 0, and R₃ = hydrogen if n = 0, or mixtures of these compounds;
(F) 0.01 - 5 parts by weight of a carboxylic acid of formula III
R₄-CH=CH-COOH (III)
wherein R₄ is a phenyl, naphthyl, cyclohexyl, or cyclohexenyl group, and C₁-C₄ alkylated and/or alkoxylated derivatives of the compound of formula III.

2. The thermoplastic molding compound according to claim 1, characterized in that polyolefins selected from the group of low-density polyethylene, very low density polyethylene, high-density polyethylene, linear low-density polyethylene, isotactic polypropylene, atactic polypropylene, syndiotactic polypropylene are contained as component A.

3. The thermoplastic molding compound according to claims 1 and 2, characterized in that 30-65 parts by weight of polyolefin, relative to the total amount, are contained as component A.

4. The thermoplastic molding compound according to claims 1 through 3, characterized in that 45-65 parts by weight of high-density polyethylene having a melt index of 0.7 - 8.5 g/10 min (measured according to DIN 53735) are contained as component A.

5. The thermoplastic molding compound according to claims 1 through 4, characterized in that 25-40 parts by weight, relative to the total amount, of a ionomer copolymer of ethylene and methacrylic acid or acrylic acid, having an acid content of 10-16 wt.-% relative to the copolymer, a density of 0.96 - 0.97 g/cm³ and a melt index of 0.7 - 7 g/10 min (measured according to DIN 53735) is used as component C, the copolymer containing 10 wt.-% of zinc ions which neutralize the acid groups.

6. The thermoplastic molding compound according to claims 1 through 5, characterized in that component C contains up to 85 mole-% α-olefin relative to the content of unsaturated carboxylic acids and/or carboxylic acid anhydride groups.

7. The thermoplastic molding compound according to claims 1 through 6, characterized in that 5-50 wt.-% of component D is selected from the group of methyl acrylate, isobutyl acrylate, n-butyl acrylate.

8. The thermoplastic molding compound according to claims 1 through 7, characterized in that the compound of formula I is a mono-, di- or triglycidyl ether.

9. The thermoplastic molding compound according to claims 1 through 8, characterized in that R₁ is hydrogen and R₂ is a C₁₃ to C₁₅ arylalkyl group.

10. The thermoplastic molding compound according to claims 1 through 9, characterized in that R₁ is hydrogen and R₂ is a compound of formula IV

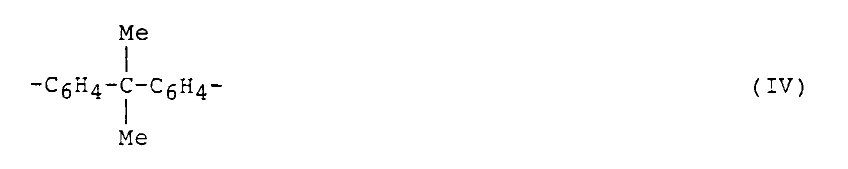

11. The thermoplastic molding compound according to claims 1 through 10, characterized in that the phenyl group of formula III is substituted by phenyl, phenoxy, hydroxyl, halogen, or cyano groups in the ortho, meta or para positions.

12. The thermoplastic molding compound according to claims 1 through 11, characterized in that conventional fillers and reinforcing agents selected from the group of glass fiber, carbon fiber, mineral fiber, talc, and chalk are contained.

13. The thermoplastic molding compound according to claims 1 through 12, characterized in that additional agents selected from the group of colorants, stabilizers, UV-protecting agents, antistatic agents, plasticizing agents, and flame retardants are contained.

14. A process for producing the thermoplastic molding compound according to claims 1 through 13, characterized in that the components are mixed and kneaded on conventional plasticizing machines, and subsequently extruded.

15. Use of the thermoplastic molding compound according to claims 1 through 13 in the production of molded articles.

## Revendications

1. Matière moulable thermoplastique contenant:
(A) de 5 à 95 parties en poids de polyoléfine choisie dans le groupe du polyéthylène, du polypropylène, du polybutène-1 et du poly(4-méthylpentène-1);
(B) de 5 à 65 parties en poids de caoutchouc de copolymère non réticulé d'éthylène et propylène, avec une teneur en éthylène de 45 à 80% en poids rapporté à la teneur totale en caoutchouc et/ou de 5 à 65 parties en poids de copolymère de cyclo-oléfine avec une teneur en éthylène de 20 à 50% en poids rapporté au copolymère de cyclo-oléfine et/ou de 5 à 65 parties en poids d'élastomère de polyoléfine provenant d'un copolymère insaturé d'éthylène et d'octène avec un indice de fusion de 0,5 à 18 g/10 min. (mesuré selon la DIN 53735);
(C) de 15 à 60 parties en poids d'un copolymère ionomère formé d'éthylène et d'un acide carboxylique α,β-insaturé ou d'un anhydride de cet acide carboxylique où l'ionomère contient des groupes d'acide carboxylique qui sont neutralisés avec des ions métalliques faisant partie du groupe du sodium, du potassium, du calcium, du magnésium et du zinc;
(D) de 0 à 65 parties en poids d'un composé d'acide carboxylique éthyléniquement α,β-insaturé ou d'un ester de cet acide carboxylique, choisi dans le groupe de l'acide acrylique et de l'acide méthacrylique;
(E) de 0,01 à 5 parties en poids d'un composé époxy de formule I 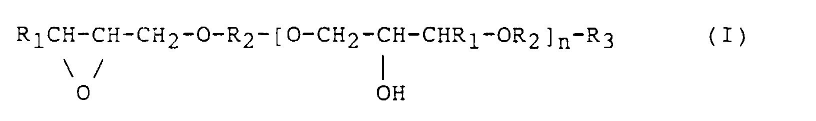 dans laquelle n = 0-10, R₁ = un atome d'hydrogène, un groupe alkyle, aralkyle ou aryle et R₂ représente un groupe alkyle, aralkyle, alkylalcoxy, cycloalkyle ou cycloalcényle et R₃ représente 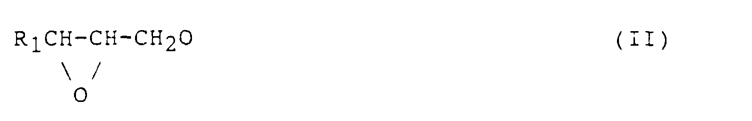 si n ≠ 0, et R3 = un atome d'hydrogène si n = 0 ou, des mélanges de ces composés;
(F) de 0,01 à 5 parties en poids d'un acide carboxylique de formule III
R₄-CH=CH-COOH (III)
où R₄ représente un groupe phényle, naphthyle, cyclohexyle ou cyclohexényle, et C₁-C₄ dérivés alkylés et/ou alcoxylés du composé de la formule III.

2. Matière moulable thermoplastique selon la revendication 1, caractérisée en ce qu'elle contient comme constituant A une polyoléfine choisie dans le groupe du polyéthylène basse densité, du polyéthylène très basse densité, du polyéthylène haute densité, du polyéthylène linéaire basse densité, du polypropylène isotactique, du polypropylène atactique, du polypropylène syndiotactique.

3. Matière moulable thermoplastique selon les revendications 1 et 2, caractérisée en ce qu'elle contient comme constituant A de 30-65 parties en poids de polyoléfine, rapportée à la quantité totale.

4. Matière moulable thermoplastique selon les revendications 1 à 3, caractérisée en ce qu'elle contient comme constituant A, rapporté à la quantité totale, de 45 à 65 parties en poids de polyéthylène haute densité, avec un indice de fusion de 0,7 à 8,5 g/10 min (mesuré selon la DIN 53735).

5. Matière moulable thermoplastique selon les revendications 1 à 4, caractérisée en ce qu'on utilise comme constituant C, rapporté à la masse totale, de 25 à 40 parties en poids d'un copolymère ionomère formé d'éthylène et d'acide méthacrylique ou d'acide acrylique avec une teneur en acide de 10 à 16 % en poids rapporté au copolymère, une densité de 0,96 à 0,97 g/cm³, un indice de fusion de 0,7 à 7 g/10 min. (mesuré selon la DIN 53735), où le copolymère contient 10 % en poids d'ions de zinc qui neutralisent les groupes acide.

6. Matière moulable thermoplastique selon les revendications 1 à 5, caractérisée en ce que le constituant C contient jusqu'à 85% en moles d'α-oléfine, rapportes à la teneur en groupes acide carboxylique et/ou anhydride insaturé.

7. Matière moulable thermoplastique selon les revendications 1 à 6, caractérisée en ce que de 5 à 50 % en poids du constituant D sont choisis dans le groupe de l'acrylate de méthyle, de l'acrylate d'isobutyle et de l'acrylate de n-butyle.

8. Matière moulable thermoplastique selon les revendications 1 à 7, caractérisée en ce que le composé de formule I est un éther mono-, di- ou triglycidique.

9. Matière moulable thermoplastique selon les revendications 1 à 8, caractérisée en ce que R₁ = l'hydrogène et R = un groupe arylalkyle en C₁₃ à C₁₅.

10. Matière moulable thermoplastique selon les revendications 1 à 9, caractérisée en ce que R₁ = l'hydrogène et R₂ = un composé de formule IV

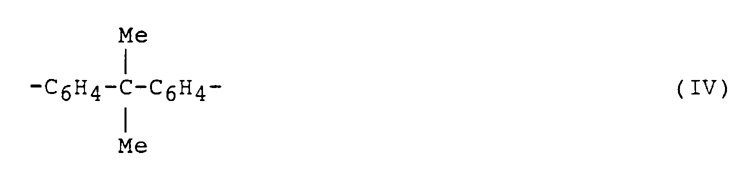

11. Matière moulable thermoplastique selon les revendications 1 à 10, caractérisée en ce que le groupe phényle de formule III est substitué par des groupes phényle, phénoxy, hydroxyle, halogène ou cyano en position ortho, métha ou para.

12. Matière moulable thermoplastique selon les revendications 1 à 11, caractérisée en ce que des matières usuelles de charge et de renforcement choisies dans le groupe des fibres de verre, des fibres de carbone, des fibres minérales, du talc et de la craie sont présents

13. Matière moulable thermoplastique selon les revendications 1 à 12, caractérisée en ce qu'elle contient des agents supplémentaires choisis dans le groupe des colorants, des stabilisants, des protecteurs contre les UV, des agents antistatiques, des agents de plastification et des agents ignifuges

14. Procédé pour la préparation des matières moulables thermoplastique selon les revendications 1 à 13, caractérisé en ce que les constituants sont mélangés sur des machines à plastifier usuelles, sont malaxés et sont ensuite extrudés.

15. Utilisation de la matière moulable thermoplastique selon les revendications 1 à 13 pour la fabrication d'articles moulés.
